Europäisches Patentamt

European Patent Office

Office européen des brevets

(19)

(11) Numéro de publication: **0 375 003**
**A1**

(12) # DEMANDE DE BREVET EUROPEEN

(21) Numéro de dépôt: 89203078.4

(22) Date de dépôt: 05.12.89

(51) Int. Cl.⁵: **B01D 67/00, B01D 69/08, D01D 5/24**

(30) Priorité: 22.12.88 FR 8817371

(43) Date de publication de la demande:
27.06.90 Bulletin 90/26

(84) Etats contractants désignés:
AT BE CH DE ES FR GB GR IT LI LU NL SE

(71) Demandeur: **SOCIETE LYONNAISE DES EAUX Société Anonyme**
**52, rue de Lisbonne**
**F-75002 Paris(FR)**

(72) Inventeur: **Aptel, Philippe**
**22 rue J. Strauss**
**F-31400 Toulouse(FR)**
Inventeur: **Espenan, Jean-Michel**
**Résidence La Bigorre Bâtiment B2 Rue de Touraine**
**F-31100 Toulouse(FR)**

(74) Mandataire: **Barre, Philippe**
**Cabinet Barre-Gatti-Laforgue 95 rue des Amidonniers**
**F-31069 Toulouse Cédex(FR)**

(54) **Procédé pour la fabrication d'un matériau poreux organique, notamment d'une membrane semi-perméable organique, comportant une pluralité de canaux longitudinaux séparés.**

(57) On dissout un polymère dans un solvant, on utilise une filière (3) comportant, d'une part, des aiguilles (13) de formes conjuguées de celles des canaux et de dimensions externes comprises entre 0,7 fois et 1,2 fois celles desdits canaux, et d'autre part, un orifice d'extrusion de forme conjuguée de celle de l'extrudat et de dimensions internes comprises entre 0,8 fois et 1,2 fois celles dudit extrudat, on injecte autour des aiguilles (13) une solution présentant une viscosité supérieure à 500 mPa.s et on introduit un fluide de centrage à l'intérieur de ces aiguilles, on recueille l'extrudat, en sortie de filière (3), dans un milieu précipitant de façon que ledit extrudat parcoure dans ledit milieu une distance de telle que $800 \times e < de < 3$ m, (e représentant la distance maximale à parcourir par un fluide précipitant pour obtenir la précipitation totale dudit extrudat), et on envide l'extrudat précipité avec une vitesse d'envidage linéaire Ve telle que $Ve/Vs < 1,2$ (Vs représentant le vitesse moyenne d'extrusion).

Fig. 1

Fig. 2

EP 0 375 003 A1

# PROCEDE POUR LA FABRICATION D'UN MATERIAU POREUX ORGANIQUE, NOTAMMENT D'UNE MEMBRANE SEMI-PERMEABLE ORGANIQUE, COMPORTANT UNE PLURALITE DE CANAUX LONGITUDINAUX SEPARES

L'invention concerne un procédé pour la fabrication d'un matériau poreux organique, notamment d'une membrane semi-perméable organique, comportant une pluralité de canaux longitudinaux séparés, procédé du type consistant à dissoudre un polymère dans un solvant, à extruder la solution obtenue au travers d'une filière dotée d'une pluralité de conduits séparés à l'intérieur desquels on introduit un fluide, dit de centrage, et à l'extérieur desquels on fait s'écouler la solution, et, enfin à précipiter l'extrudat obtenu.

Les membranes semi-perméables organiques dotées d'une pluralité de canaux longitudinaux séparés présentent d'importants avantages par rapport aux fibres creuses classiques. En effet, elles présentent une grande résistance mécanique qui simplifie notablement les problèmes de manipulation. De plus, les vitesses de production sont accélérées du fait qu'une longueur inférieure de membrane est nécessaire pour la réalisation d'un faisceau. Enfin, la réalisation des modules de filtration se trouve notablement simplifiée. De tels avantages ont conduit à un développement de l'emploi de ces membranes dont des techniques de fabrication ou des applications sont notamment décrites dans les brevets DE-A-3 022 313, WO-A-8 102 705, FR-A-2 445 163 et JP-A-5 982 906. Toutefois, les techniques connues et notamment celles décrites dans ces brevets ne permettent pas de maîtriser de façon rationnelle tous les paramètres de fabrication des membranes et notamment de conférer à celles-ci des structures particulières prédéfinies ou de maîtriser de façon très précise les dimensions externes de ces membranes ainsi que la section de leurs canaux.

La présente invention vise à combler ces lacunes et a pour principal objectif de fournir un procédé permettant de réaliser des membranes présentant des structures particulières bien définies et dont les dimensions, ainsi que celles de leurs canaux, sont parfaitement définies.

A cet effet, l'invention vise un procédé se caractérisant en ce que :
- on utilise une filière comportant, d'une part, des aiguilles de formes conjuguées de celles des canaux et de dimensions externes comprises entre 0,7 fois et 1,2 fois celles desdits canaux et, d'autre part, un orifice d'extrusion de forme conjuguée de celle de l'extrudat et de dimensions internes comprises entre 0,8 fois et 1,2 fois celles dudit extrudat,
- on dispose la filière de façon à extruder la solution sensiblement verticalement,
- on injecte autour des aiguilles une solution présentant une viscosité supérieure à 500 millipascal seconde ("Contraves", Rhéomat 115, taux de cisaillement de 28 s$^{-1}$) avec un débit adapté de façon à obtenir une vitesse d'extrusion moyenne Vs es sortie de filière;
- on recueille l'extrudat, en sortie de filière, dans un milieu non solvant à l'égard du polymère et apte à précipiter la solution polymérique, de façon que ledit extrudat parcoure dans ledit milieu une distance $d_e$ telle que :
800 xe < $d_e$ < 3m
où e représente la distance maximale à parcourir par un fluide précipitant à l'intérieur de l'extrudat, pour obtenir la précipitation totale dudit extrudat,
- et on envide l'extrudat précipité avec une vitesse d'envidage linéaire Ve telle que Ve/Vs < 1,2.

Ce procédé permet de réaliser une membrane dont la matière polymérique est composée d'une couche active à la surface de la membrane et d'une épaisseur intermédiaire de porosité supérieure à celle de la dite couche active.

l'intérêt de telles membranes réside dans le fait qu'une couche active constitue un écran de filtration évitant que la filtration se fasse en profondeur dans la matière polymérique et par là-même que les membranes ne se saturent irréversiblement.

En outre, toutes les conditions opératoires mises en oeuvre dans ce procédé sont adaptées pour obtenir la précipitation totale de la membrane avant que celle-ci ne rencontre un obstacle qui aurait tendance à la déformer, tout en contrôlant parfaitement les phénomènes d'étirement de l'extrudat qui conditionnent les dimensions externes de cette membrane ainsi que celles des canaux.

Selon un premier mode de mise en oeuvre préférentiel, on introduit dans les conduits de la filière un fluide de centrage non précipitant à l'égard de la solution polymérique. La membrane réalisée présente alors une seule couche active sur sa surface externe.

Ce procédé est notamment très avantageux lorsque les membranes fabriquées sont planes car ces dernières peuvent alors remplacer une partie de l'empilement dans les modules de filtre presse.

En outre, dans ce cas, le fluide de centrage utilisé est préférentiellement une solution miscible avec le fluide précipitant et apte à présenter un état liquide au dessus d'une température déterminée tg, et passer à l'état de gel au dessous de la dite température. Cette solution est chauffée à une température supérieure à tg de façon à l'introduire à l'état liquide dans les conduits de la filière, puis on abaisse sa température en sortie de filière de façon à la gélifier.

L'utilisation d'une telle solution en tant que fluide de centrage permet de rigidifier l'extrudat en sortie de filière et donc d'assurer un meilleur maintien de ce dernier et garantit l'obtention de canaux parfaitement formés.

Par ailleurs, on peut également faire avantageusement parcourir à l'extrudat une distance da inférieure à 0,3 m dans une atmosphère gazeuse non précipitante à l'égard de la solution polymérique, avant de la recueillir dans le milieu précipitant.

Ce passage dans une atmosphère gazeuse non précipitante présente deux avantages : d'une part, il permet d'étirer quelque peu l'extrudat et par conséquent de faire varier de façon contrôlée les dimensions externes de la membrane. D'autre part, il permet d'obtenir un réaménagement de la matière polymérique formant l'extrudat avant de précipiter cette dernière, et notamment d'éliminer le gonflement que subit généralement cette matière polymérique en sortie de filière.

Selon un deuxième mode de mise en oeuvre préférentiel, le fluide de centrage introduit dans les conduits de la filière est un fluide non solvant à l'égard du polymère et apte à précipiter la solution polymérique.

La membrane réalisée présente alors non seulement une couche active sur sa surface externe mais également des couches actives à la surface de chaque canal.

Les avantages de telles membranes sont de trois types : en premier lieu, elles peuvent fonctionner avec un liquide circulant dans les canaux ou circulant à l'exterieur de la membrane et sont donc très facilement lavables. De plus, elles présentent une très bonne résistance mécanique. Enfin, de telles membranes permettent de prévenir, dans le cas de la microfiltration ou de l'ultrafiltration, la prolifération de bactéries à l'intérieur de la matière polymérique qui peuvent entrainer la saturation de la membrane ou même la détruire si cette dernière est biodégradable.

Par ailleurs, comme pour le premier mode de mise en oeuvre préférentiel, et dans le même but, on peut faire avantageusement parcourir à l'extrudat une distance da inférieure à 500 c dans une atmosphère gazeuse avant de la recueillir dans le milieu précipitant, c représentant la distance minimale entre la surface des canaux et la surface externe de l'extrudat.

Enfin, un troisième mode de mise en oeuvre peut consister à introduire dans les différents conduits de la filière des fluides de centrage de natures différentes de façon à obtenir des canaux de porosités superficielles différentes.

L'invention sera mieux comprise à la lecture de la description détaillée qui suit en référence aux dessins annexés qui en représentent à titre d'exemple non limitatif un mode de mise en oeuvre préférentiel. Sur ces dessins qui font partie intégrante de la présente description :

- la figure 1 est un schéma synoptique illustrant un processus de fabrication conforme à l'invention,
- la figure 2 est une vue schématique de face de la filière utilisée dans l'exemple de mise en oeuvre décrit dans cette description.

La solution polymérique obtenue par dissolution d'un matériau polymérique dans un solvant est initialement stockée dans un réservoir 1. Parallèlement, un fluide de centrage est stocké dans un réservoir 2.

Chacun de ces réservoirs 1,2 est raccordé à une filière 3 au moyen de canalisations 4, 5 d'alimentation agencées pour que le fluide de centrage s'écoule à l'intérieur des aiguilles de cette filière 3 et la solution polymérique, à l'extérieur des dites aiguilles.

La filière 3 comporte des aiguilles de formes conjuguées de celles des canaux de la membrane à réaliser et de dimensions externes comprises entre 0,7 fois et 1,2 fois celle des dits canaux. Elle comporte en outre un orifice d'extrusion de forme conjuguée de celle de l'extrudat, c'est-à-dire de forme cylindrique pour la réalisation d'une membrane cylindrique ou de forme rectangulaire de faible largeur par rapport à sa longueur pour la réalisation d'une membrane plane. Les dimensions internes de cet orifice d'extrusion sont comprises entre 0,8 fois et 1,2 fois celles de la membrane à fabriquer.

Par ailleurs, chacune des canalisations est dotée d'une pompe de circulation 6, d'un filtre 7 et d'un échangeur de chaleur 8 adapté pour maintenir constante la température de fluide et de solution.

A l'aplomb de cette filière 3 disposée de façon à extruder la solution sensiblement verticalement, se trouve un bac de récupération rempli d'un liquide non solvant à l'égard du polymère et apte à précipiter la solution polymérique. Le bac de récupération 9 se trouve à une distance de la filière 3, telle que l'extrudat parcoure une distance da avant d'atteindre la surface du liquide.

Dans le fond de ce bac 9, est, en outre, disposée une poulie de renvoi 10 permettant de guider, par l'intermédiaire d'une autre poulie de renvoi 11, la membrane vers une bobineuse 12. La vitesse linéaire d'envidage Ve de cette bobineuse 12 est réglée en fonction de la vitesse moyenne d'extrusion Vs en sortie

3

de filière 3, de façon que Ve/Vs < 1,2.

La première poulie de renvoi 10 est quant à elle disposée dans le bac de récupération 9 à une profondeur telle que l'extrudat parcoure verticalement une distance de dans le liquide avant de venir en contact avec cette poulie de renvoi.

Trois exemples de mise en oeuvre adaptés pour fabriquer une membrane plane dotée de sept canaux sont décrits ci-dessous.

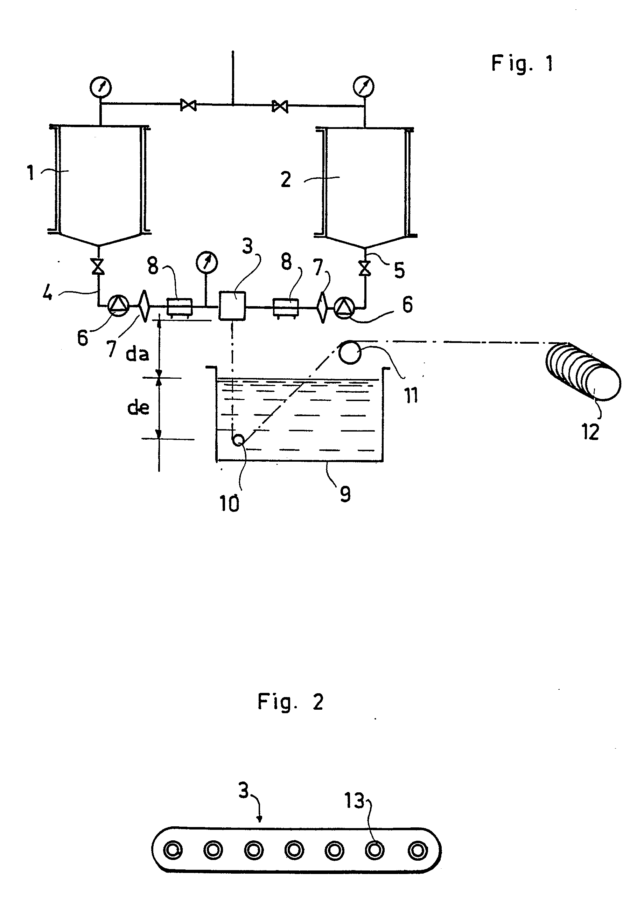

Tel que représenté schématiquement à la figure 2, la filière 3 utilisée présente une section sensiblement rectangulaire dont l'orifice d'extrusion comporte une longueur linéaire de 12,8 mm et une largeur de 2 mm. A l'intérieur de cette filière 3, sont disposées sept aiguilles 13 de diamètre externe 0,81 mm et de diamètre interne 0,51 mm. La distance séparant deux aiguilles 13 est en outre de 0,89 mm.

Exemple 1 :

Exemple de fabrication d'une membrane comportant une couche active sur sa surface externe.

Das ce cas et avec une filière telle que décrite ci-dessus, la distance maximale à parcourir par le fluide précipitant est de l'ordre de 1 mm.

Dans cet exemple, le bac de récupération 9 est rempli d'eau et a été placé de façon que la distance da soit de 0,5 cm, tandis que la poulie de renvoi 10 est disposée dans ce bac 9 à une profondeur telle que de = 102 cm.

. La solution polymérique présente la composition suivante (en % massique) :

| - Polysulfone AMOCO "UDEL 3500" | 28 % |
| - Triton 100 | 30 % |
| - N méthylpyrrolidone | 42 % |

A la température d'extrusion de 25 °C, cette solution présente une viscosité de 127 000 m.Pa.s mesurée avec un Rhéomat 115 de contraves, à un taux de cisaillement de 28 s⁻¹. En outre, elle est extrudée avec un débit Qs = 50 cm³/mn.

. Le fluide de centrage non précipitant présente quant à lui la composition suivante (% massique) :

| NMP | 95 % |
| eau | 5 % |

Il est introduit dans les aiguilles 13 avec un débit Qf = 40 cm³/mn.
. En dernier lieu, la bobineuse 12 est réglée de façon que la vitesse d'envidage Ve soit de 2,4 m/mn.

Dans ces conditions, le produit obtenu est une membrane comportant sept canaux n'ayant pas de couches actives à leur surface, mais présentant une couche active sur sa surface externe et une couche intermédiaire présentant une porosité supérieure à celle de la dite couche active.

Cette membrane présente une largeur de 12,9 mm et une épaisseur de 2,2 mm, le diamètre interne de chacun des canaux étant de 0,85 mm. Enfin, la valeur de la perméabilité hydraulique, mesurée avec un fluide s'écoulant à l'extérieur de la membrane, est de 1,8 10⁻¹⁰ m/s.Pa pour de l'eau à 25 °C et un ΔP de 0,1 10⁵ Pa à 1.10⁵ Pa.

Exemple 2 :

exemple de fabrication d'une membrane comportant une couche active sur sa surface externe.

La filière utilisée est la même que dans l'exemple 1. La composition de la solution polymérique est également identique. Toutefois, elle est extrudée à une température de 70 °C où elle présente une viscosité de 9 000 m Pa s. mesurée avec un réhomat 115 de Contraves, à un taux de cisaillement de 28 s⁻¹.

Les autres paramètres sont :
da = 0,5 cm

de = 102 cm

Qs = 50 cm$^3$/mn

Qf = 40 cm$^3$/mn

Vc = 2,4 m/mn

Le fluide de centrage est quant à lui constitué de polyéthylène glycol de masse molaire moyenne 10 000, dont le point de fusion est de 60 à 62°°C. A la température d'extrusion de 70° C de fluide est donc liquide, puis il se solidifie rapidement dans l'air et dans l'eau qui est à une température de 30° C.

Il et à noter en outre que ce fluide de centrage est éliminé après filage, par rinçage avec de l'eau à une température supérieure à la température tg, de l'ordre de 80° C.

La membrane obtenue présente, comme dans l'exemple 1, une couche active sur sa surface externe. Ses dimensions sont de 12,9 mm par 2,2 mm et le diamètre des canaux est de 0,81 mm. Enfin, la perméabilité de cette membrane, measurée avec un fluide s'écoulant à l'extérieur de celle-ci, est de 1,6 $10^{-10}$ m/s.Pa pour de l'eau à 25° C et un $\Delta$P de 0,1.10$^5$ Pa à 1.10$^5$ Pa.

Exemple 3:

exemple de fabrication d'une membrane comportant une couche active à la surface de chaque canal, et une couche active sur sa surface externe.

Dans ce cas, et toujours avec la même filière, la distance maximum à parcourir par le fluide précipitant est de l'ordre de 0,5 mm car le fluide de centrage est lui-même précipitant.

. Les autres paramètres sont:

da = 2,8 cm

de = 82 cm

Ve = 1,6 m/mn

Qs = 33,5 cm$^3$/mn à 40 ° C.

Qf = 38,9 cm$^3$/mn

. La solution polymérique présente la composition suivante (en % massique) :

| - diacétate de cellulose : | 20 % |
| Eastman E398-10 | |
| - éthylène glycol : | 30 % |
| - N méthylpyrrolidone : | 50 % |

Sa viscosité est de 370.000 m Pa.s à la température d'extrusion de 40° C.

. Le fluide de centrage précipitant est de l'eau.

. Dans ces conditions, le produit obtenu est une membrane comprenant sept canaux et comportant une couche active à la surface de chaque canal, une couche active à sa surface, et une épaisseur intermédiaire de porosité supérieure à celle des dites couches actives.

Cette membrane présente une largeur de 12,9 mm, une épaisseur de 2,4 mm, le diamètre interne des canaux étant de 1,05 mm. Enfin, la valeur de la perméabilité hydraulique mesurée avec un fluide s'écoulant dans les canaux est de 3,6 $10^{-10}$ m/s.Pa pour de l'eau à 25° C et un $\Delta$ P de 0,1.10$^5$ Pa à 1.10$^5$ Pa.

## Revendications

1) Procédé pour la fabrication d'un matériau poreux organique, notamment d'une membrane semi-perméable organique, du type consistant à dissoudre un polymère dans un solvant, à extruder la solution ainsi obtenue au travers d'une filière (3) dotée d'une pluralité de conduits (13) séparés à l'intérieur desquels on introduit au moins un fluide, dit de centrage, et à l'extérieur desquels on fait s'écouler la solution de façon à former un extrudat doté d'une pluralité de canaux longitudinaux, et à précipiter cet extrudat, le dit procédé étant caractérisé en ce que :
- on utilise une filière (3) comportant, d'une part, des aiguilles (13) de formes conjuguées de celles des canaux et de dimensions externes comprises entre 0,7 fois et 1,2 fois celles desdits canaux, et d'autre part, un orifice d'extrusion de forme conjuguée de celle de l'extrudat et de dimensions internes comprises entre 0,8 fois et 1,2 fois celles dudit extrudat,
- on dispose la filière (3) de façon à extruder la solution sensiblement verticalement,
- on injecte autour des aiguilles (13) une solution présentant une viscosité supérieure à 500 millipascal seconde ("Contraves"; Rhéomat 115, taux de cisaillement de 28 s$^{-1}$) avec un débit adapté de façon à obtenir une vitesse d'extrusion moyenne Vs en sortie de filière,
- on recueille l'extrudat, en sortie de filière, dans un milieu non solvant à l'égard du polymère et apte à précipiter la solution polymérique, de façon que ledit extrudat parcoure dans ledit milieu une distance de telle que :

$800 \times 3 < de < 3 \, m$

où e représente la distance maximale à parcourir par un fluide précipitant à l'intérieur de l'extrudat, pour obtenir la précipitation totale dudit l'extrudat,
- et on envide l'extrudat précipité avec une vitesse d'envidage linéaire Ve telle que Ve/Vs < 1,2.

2) Procédé selon la revendication 1 dans lequel on introduit dans les conduits (13) de la filière (3) un fluide de centrage non précipitant à l'égard de la solution polymérique.

3) Procédé selon la revendication 2 caractérisé en ce que, avant de recueillir l'extrudat dans le milieu précipitant, on fait parcourir à ce dernier une distance da<0,3 m dans une atmosphère gazeuse non précipitante à l'égard de la solution polymérique.

4) Procédé selon l'une des revendications 2 ou 3 caractérisé en ce que :
- on utilise, comme fluide de centrage, une solution miscible avec le fluide précipitant apte à présenter un état liquide au dessus d'une température déterminée $t_g$ et passer à l'état de gel au dessous de la dite température,
- on chauffe ce fluide de centrage à une température supérieure à $t_g$ de façon à l'introduire à l'état liquide dans les conduits (13) de la filière (3),
- et on abaisse la température de ce fluide de centrage en sortie de filière (3) de façon à le gélifier.

5) Procédé selon la revendication 4 caractérisé en ce que l'on élimine le fluide de centrage, après filage, par rinçage de la membrane avec de l'eau portée à une température supérieure à $t_g$.

6) Procédé selon la revendication 1 dans lequel on introduit dans les conduits (13) de la filière (3) un fluide de centrage non solvant à l'égard du polymère et apte à précipiter la solution polymérique.

7) Procédé selon la revendication 6 caractérisé en ce que, avant de recueillir l'extrudat dans un milieu précipitant, on fait parcourir à ce dernier une distance da dans une atmosphère gazeuse non précipitante à l'égard de la solution polymérique, avec : da < 500 c où c représente la distance minimale entre la surface des canaux et la surface externe de la membrane.

8) Procédé selon l'une des revendications précédentes caractérisé en ce que l'on introduit dans les différents conduits (13) de la filière (3) des fluides de centrage de natures différentes de façon à obtenir des canaux de porosités superficielles différentes.

Fig. 1

1

2

8

3

8

7

4

6

7

da

de

5

6

11

12

10

9

Fig. 2

3

13

| | Office européen des brevets | RAPPORT DE RECHERCHE EUROPEENNE | Numero de la demande |
|---|---|---|---|

EP 89 20 3078

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| P,X | FR-A-2 616 812 (SOC. LYONNAISE DES EAUX)(23-12-1988) * Résumé; figure 1; revendications 1-8; page 5, ligne 9 - page 6, ligne 9; page 9, ligne 35 - page 11, ligne 14; page 15, ligne 10 - page 16, ligne 39 * | 1-3,6-8 | B 01 D 67/00 B 01 D 69/08 D 01 D 5/24 |
| D,A | DE-A-3 022 313 (NIPPON ZEON CO. LTD) * Revendications 5,6; page 6, lignes 6-23; page 11, ligne 8 - page 13, ligne 24; exemple 1; figures 1,2,4-6,12,14 * | 1-3 | |
| D,A | WO-A-8 102 750 (BAXTER TRAVENOL LAB.) * Résumé; figures 3-5; revendications 1-7; page 7, lignes 9-33 * | 1-3 | |
| A | FR-A-2 437 857 (AKZO NV) * Figures 4-6; revendications 1,9-13; page 3, ligne 6 - page 4, ligne 8; page 5, ligne 2 - page 6, ligne 19 * | 1,2 | |
| A | US-A-3 975 478 (R.L. LEONARD) * Résumé; colonne 2, ligne 48 - colonne 3, ligne 52; revendications 1,5 * | 1,6,7 | DOMAINES TECHNIQUES RECHERCHES (Int. Cl.5) B 01 D |
| A | WO-A-8 600 028 (INST. NAT. DE RECH. CHEM. APPL., C.N.R.S.) * Résumé; figure 12; revendications 8,11; page 5, ligne 28 - page 6, ligne 32; exemple 1 * | 1-3 | |
| A | US-A-3 674 628 (A. FABRE) * En entier * | 1-3,6,7 | |

Le présent rapport a été établi pour toutes les revendications

| Lieu de la recherche | Date d'achèvement de la recherche | Examinateur |
|---|---|---|
| LA HAYE | 20-12-1989 | HOORNAERT P.G.R.J. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................................
& : membre de la même famille, document correspondant

EPO FORM 1503 03.82 (P0402)